# FASCICULE DE BREVET EUROPEEN

(11) **EP 3 523 837 B1**
(45) Date de publication et mention de la délivrance du brevet: **11.11.2020**
(21) Numéro de dépôt: 17778300.8
(22) Date de dépôt: 04.10.2017
(51) Int. Cl.: H01M 2/02, H01M 2/20, H01M 2/26, H01M 2/30, H01M 2/04, H01M 4/485, H01M 10/0525, H01M 10/0587

(54) **ACCUMULATEUR**
AKKUMULATOR
ACCUMULATOR

(30) Priorité: 04.10.2016 FR 1659580
(43) Date de publication de la demande: 14.08.2019
(73) Titulaire: SAFT, 92300 Lavallois-Perret (FR)
(72) Inventeur: BERLUREAU, Thierry, 33300 Bordeaux (FR); RIGOBERT, Gérard, 33370 Fargues St Hilaire (FR)
(74) Mandataire: Hirsch & Associés
(86) Numéro de dépôt international: PCT/EP2017/075235
(87) Numéro de publication internationale: WO 2018/065473

(56) Documents cités:
- EP-A1- 3 024 054
- FR-A1- 2 853 764
- FR-A1- 3 019 686
- US-A1- 2005 153 194

## Description

### DOMAINE TECHNIQUE

La présente invention concerne un accumulateur, notamment de type lithium-ion. Elle trouve notamment une application dans des domaines aussi variés que celui des dispositifs de communication ou des ordinateurs portables, des véhicules électriques, des systèmes de secours.

### ETAT DE LA TECHNIQUE

Le stockage de l'énergie électrique est un domaine en plein essor, notamment en raison de l'ouverture de nouveaux marchés liés par exemple aux besoins en infrastructure, à la transition énergétique, aux objets connectés et plus généralement à la connectivité entre composants de divers systèmes. Les accumulateurs constituent une réponse adaptée à ce besoin en stockage d'énergie électrique.

Parmi les différentes technologies utilisées, la technologie dite lithium-ion est de plus en plus présente. Les accumulateurs du type lithium-ion sont devenus indispensables par exemple pour les téléphones ou les ordinateurs portables, mais également pour les véhicules électriques. On les retrouve également de plus en plus dans les domaines traditionnels industriels de la batterie. Une des raisons de leur succès provient de leur excellente densité énergétique et volumique, et leur prix en constante baisse.

Selon cette technologie, on utilise généralement un feuillard mince en cuivre comme support des électrodes négatives et un feuillard mince en aluminium comme support des électrodes positives. Le feuillard est enduit d'une pâte comprenant la matière électrochimiquement active, à l'exception de ses extrémités qui ne sont pas recouvertes de cette matière sur une portion de quelques millimètres de longueur. Cette portion non recouverte est utilisée pour souder le feuillard à une des extrémités d'une pièce de connexion, en cuivre dans le cas d'un feuillard en cuivre, dont le rôle est de collecter le courant issu des électrodes. L'autre extrémité de cette pièce de connexion est soudée à une borne de sortie de courant, positive ou négative en fonction de la polarité des électrodes concernées, qui est généralement aussi en cuivre dans le cas d'un feuillard en cuivre.

Un tel accumulateur comprend ainsi généralement un conteneur, de préférence de format cylindrique, obturé en au moins une de ses extrémités par un couvercle. Le conteneur renferme un faisceau électrochimique qui est obtenu par enroulement d'une alternance d'électrodes positives et négatives séparées par un séparateur. Le couvercle sert de borne de sortie de courant.

On connait notamment du document CN201243063Y un accumulateur de ce type. Tel que décrit dans ce document, la connexion entre le faisceau d'électrodes et le couvercle est réalisée au moyen d'une pluralité de lamelles de collection de courant.

Un des problèmes liés à l'utilisation d'une ou plusieurs pièces de connexion entre le couvercle et le faisceau d'électrodes réside dans l'augmentation de la résistance de contact. Cette résistance de contact et la faible section de passage engendrent une mauvaise dissipation thermique ainsi qu'une perte de puissance électrique. Ainsi, la dissipation thermique, et la puissance et l'énergie volumiques, donc la densité d'énergie, ne sont pas optimales.

Un autre problème lié à l'utilisation d'une ou plusieurs pièces de connexion entre le couvercle et le faisceau d'électrodes réside dans le procédé d'assemblage qui s'en trouve compliqué et coûteux à mettre en œuvre. Outre le coût de la ou des pièces de connexion intermédiaires elles-mêmes, leur assemblage par soudure d'une part au couvercle et d'autre part au faisceau d'électrodes augmente le temps et le coût de fabrication.

Les documents US 2005/153194 A1, FR 3 019 686 A1 et EP 3 024 054 A1 divulguent des batteries secondaires de forme cylindrique comprenant un conteneur contenant un faisceau électrochimique comportant une alternance d'électrodes positives et négatives encadrant des séparateurs imprégnés d'électrolyte, et au moins une borne de sortie constituant un couvercle de la batterie, ce dernier étant directement connecté par soudure à une portion non-revêtue d'une des électrodes.

### RESUME DE L'INVENTION

Un des buts de l'invention est donc de résoudre notamment les problèmes précités. En particulier, l'invention a notamment pour objectif de proposer un accumulateur plus facile et moins coûteux à fabriquer, à performances énergétiques et de dissipation thermique améliorées.

Ainsi, l'invention a pour objet un accumulateur comprenant un conteneur contenant un faisceau électrochimique. Ce faisceau électrochimique comporte une alternance d'électrodes positives et négatives encadrant des séparateurs imprégnés d'électrolyte.

L'accumulateur comprend également un tube creux d'axe central (A) autour duquel le faisceau électrochimique est enroulé, les rives des électrodes positives, respectivement négatives, étant réparties sensiblement uniformément et de façon circulaire autour dudit axe (A) à proximité respectivement de chacune des extrémités dudit tube creux.

Le conteneur, formé dans un matériau électriquement isolant, présente une première et une deuxième extrémités.

L'accumulateur comprend en outre une première et une deuxième bornes de sortie de courant. La première borne de sortie de courant forme un premier couvercle de fermeture de la première extrémité du conteneur, les rives des électrodes d'une des polarités étant connectées directement audit premier couvercle par soudure. La deuxième borne de sortie de courant forme un deuxième couvercle de fermeture de la deuxième extrémité du conteneur, les rives des électrodes de l'autre des polarités étant connectées directement audit deuxième couvercle par soudure également.

Par rives d'électrodes on entend les bandes d'électrodes non revêtues à chacune des extrémités latérales de ces électrodes, c'est-à-dire les bandes non revêtues à l'extrémité de polarité négative formant ainsi l'anode du faisceau électrochimique, et les bandes non revêtues à l'extrémité de polarité positive, formant ainsi la cathode du faisceau électrochimique.

Suivant certains modes de réalisation, l'accumulateur comprend en outre une ou plusieurs des caractéristiques suivantes, prise(s) isolément ou suivant toutes les combinaisons techniquement possibles :
- les rives des électrodes positives, respectivement négatives, tassées et forment un socle de connexion soudé directement au premier, respectivement deuxième, couvercles ;
- le premier et/ou deuxième couvercle est pourvu, en son centre et sur sa face orientée vers l'intérieur du conteneur, d'une projection intérieure qui s'insère dans l'une des extrémités du tube creux ;
- la projection intérieure forme un creux extérieur de connexion du côté de la face du premier et/ou deuxième couvercle orientée vers l'extérieur du conteneur, en sorte de permettre la connexion électrique avec un autre accumulateur, par coopération de type mâle-femelle avec une projection extérieure de connexion disposée au centre d'un couvercle de fermeture du conteneur dudit autre accumulateur, sur la face orientée vers l'extérieur du conteneur de cet autre accumulateur ;
- le creux extérieur de connexion est taraudé, en sorte de permettre une coopération de type mâle-femelle par vissage d'une projection extérieure de connexion filetée disposée au centre du couvercle de fermeture du conteneur du l'autre accumulateur, sur la face orientée vers l'extérieur du conteneur de cet autre accumulateur ;
- le premier et/ou deuxième couvercle est pourvu, en son centre et sur sa face orientée vers l'extérieur du conteneur, d'une projection extérieure de connexion, en sorte de permettre la connexion électrique avec un autre accumulateur, par coopération de type mâle-femelle avec un creux extérieur de connexion disposé au centre d'un couvercle de fermeture du conteneur dudit autre accumulateur, sur la face orientée vers l'extérieur du conteneur de cet autre accumulateur ;
- la projection extérieure de connexion est filetée, en sorte de permettre une coopération de type mâle-femelle par vissage dans un creux extérieur de connexion taraudé disposé au centre du couvercle de fermeture du conteneur de l'autre accumulateur, sur la face orientée vers l'extérieur du conteneur de cet autre accumulateur ;
- le conteneur comprend un film en matériau souple électriquement isolant, fermé sur lui-même par soudure en sorte de former une enveloppe souple, à l'intérieur de laquelle est disposé le faisceau électrochimique ;
- le film est en matériau plastique souple, tel qu'un polyester, du polyéthylène (PE), du polypropylène (PP), ou du poly-téréphtalate d'éthylène (PET) ;
- le film est en matériau laminé comprenant au moins une feuille métallique, telle qu'une feuille d'aluminium, insérée entre deux feuilles de plastique, tel que des feuilles en polyester, en polyéthylène (PE), en polypropylène (PP), ou en poly-téréphtalate d'éthylène (PET) ;
- le conteneur comprend un tube extérieur en matériau électriquement isolant, rigide ou semi-rigide, tel qu'un matériau plastique comme du polypropylène ou polyester ;
- le tube extérieur recouvre l'enveloppe souple ;
- le premier et/ou deuxième couvercle de fermeture du conteneur est serti sur le tube extérieur ou sur l'enveloppe souple ;
- le premier et/ou deuxième couvercle de fermeture du conteneur est collé sur la paroi interne ou la paroi externe du tube extérieur ou de l'enveloppe souple ;
- le premier et/ou deuxième couvercle de fermeture du conteneur est soudé sur la paroi interne ou la paroi externe du tube extérieur ou de l'enveloppe souple ;
- le conteneur comprend un renfort filamentaire extérieur, de préférence en matériau plastique tel qu'un film ou un ruban en polyester renforcé de fibres de verre, enroulé autour de l'enveloppe souple ou du tube extérieur ;
- le faisceau électrochimique est de type lithium-ion ;
- les électrodes positives sont réalisées sur un substrat en aluminium, et les électrodes négatives sont réalisées sur un substrat en cuivre ;
- le faisceau électrochimique est de type lithium-oxyde de titanate ou LTO ;
- les électrodes positives et négatives sont réalisées sur un substrat en aluminium.

Ainsi, l'accumulateur selon l'invention est quasiment uniquement basé sur son cœur électrochimique de type bobinot, ce qui rend ses performances énergétiques et de dissipation thermique optimales, avec une enveloppe et une structure mécanique réduites au minimum.

En effet, la liaison directe entre le cœur électrochimique de l'accumulateur et le couvercle qui fait office de borne positive ou négative pour l'utilisateur, limite la résistance électrique de contact. Un tel accumulateur présente ainsi une densité d'énergie et une puissance volumique proches du maximum et une excellente dissipation thermique.

En outre, la fabrication de l'accumulateur ne nécessite que très peu de pièces mécaniques, ce qui diminue le coût de fabrication, la masse et le volume de cet accumulateur.

### FIGURES

Les caractéristiques et avantages de l'invention apparaitront à la lecture de la description qui va suivre, donnée uniquement à titre d'exemple, et non limitative, en référence aux figures annexées suivantes :
- figure 1 : représente schématiquement un premier exemple d'accumulateur selon l'invention ;
- figure 2 : représente schématiquement un deuxième exemple d'accumulateur selon l'invention ;
- figure 3 : représente schématiquement un autre exemple de couvercle formant borne positive ou négative d'un accumulateur selon l'invention ;
- figures 4a, 4b : représentent schématiquement deux exemples d'assemblage du conteneur d'un accumulateur selon l'invention ;
- figure 5 : représente schématiquement un autre exemple de couvercle formant borne positive ou négative, et son assemblage avec le conteneur, d'un accumulateur selon l'invention ;

### EXPOSE DE MODES DE REALISATION

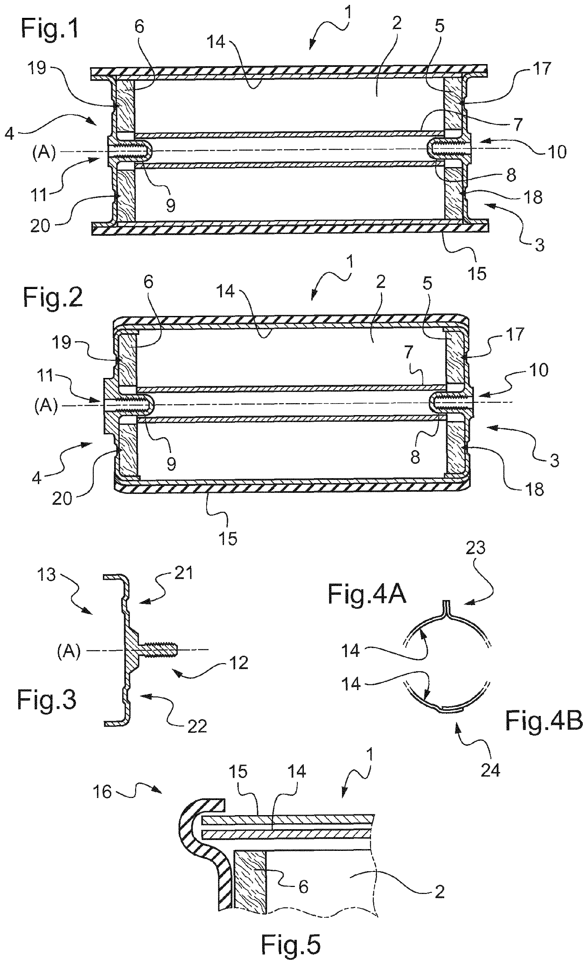

Dans l'exemple représenté à la figure 1, on retrouve un accumulateur comprenant un faisceau électrochimique 2 enserré dans un conteneur 1.

Le faisceau électrochimique 2 est constitué d'une alternance d'électrodes 2 positives et négatives encadrant des séparateurs imprégnés d'électrolytes.

Le conteneur 1 présente deux extrémités, chacune fermée par un couvercle 3, 4. Chacun des couvercles 3, 4 forme une borne 3, 4 de sortie de courant, l'une positive et l'autre négative.

Les rives 5, 6 des électrodes sont connectées directement à l'un des deux couvercles 3, 4 par soudure, de préférence réalisée au laser, en fonction de la polarité des électrodes en question. Ainsi, par exemple, les rives 5 des électrodes positives sont connectées par soudure directement au couvercle 3 formant borne positive de sortie de courant, et les rives 6 des électrodes négatives sont connectées par soudure directement au couvercle 4 formant borne négative de sortie de courant.

Dans le cas d'un faisceau électrochimique 2 de type lithium-ion, les électrodes positives sont réalisées sur un substrat en aluminium, et les électrodes négatives sont réalisées sur un substrat en cuivre.

Alternativement, dans le cas plus spécifique de la technologie lithium-ion dans lequel l'électrode négative du faisceau électrochimique 2 est de type lithium-oxyde de titanate (LTO), le feuillard pour les électrodes négatives peut être en aluminium également, de sorte que les électrodes positives tout comme les électrodes négatives sont réalisées sur un substrat en aluminium. Ce type de faisceau électrochimique 2 offre l'avantage de présenter des temps de charge et de décharge ultra-rapides, donc de fortes puissances électriques.

On rappelle que les rives 5, 6 des électrodes sont les bandes d'électrodes non revêtues à chacune des extrémités latérales de ces électrodes. Ces bandes 6 non revêtues à l'extrémité de polarité négative forment l'anode du faisceau électrochimique 2, et les bandes 5 non revêtues à l'extrémité de polarité positive, forment la cathode du faisceau électrochimique 2.

Les points ou lignes de soudure 17, 18, 19, 20 sont représentés sur la figure 1, au niveau des contacts respectifs entre les rives 5, 6 du faisceau d'électrodes 2 et les couvercles 3, 4.

Ces rives 5, 6 sont de préférence tassées, conformément à ce qui est décrit par exemple dans document EP 1 596 449. Ces rives 5, 6 tassées forment alors chacune un socle 5, 6 de connexion, soudé directement à l'un des couvercles 3, 4.

Le tassement des rives 5, 6 facilite la connexion de ces rives 5, 6 sur une surface de contact électrique optimale.

Tel que représenté dans l'exemple de la figure 1, le faisceau électrochimique 2 est enroulé autour d'un tube creux 7 d'axe central (A).

Les rives 5, 6 des électrodes 2 sont ainsi réparties de façon circulaire uniformément autour de l'axe (A), chacune à proximité d'une des extrémités du tube creux 7.

Dans l'exemple de la figure 1, chacun des couvercles 3, 4 circulaires est pourvu en son centre, sur sa face orientée vers l'intérieur du conteneur 1, d'une projection 8, 9, qui vient s'insérer dans l'une des extrémités du tube creux 7.

Dans cette variante, les projections intérieures 8, 9 sont creuses du côté des faces respectives des couvercles 3, 4 orientées vers l'extérieur du conteneur 1. Ainsi, un creux extérieur 10, de préférence taraudé, est formé dans la projection intérieure 8, et un creux extérieur 11, également de préférence taraudé, est formé dans la projection intérieure 9.

Ces creux extérieurs 10, 11 permettent de connecter électriquement les couvercles 3, 4 avec le couvercle d'un autre accumulateur qui prend par exemple la forme du couvercle 13 représenté à la figure 3. Ce couvercle 13 présente en effet une projection extérieure 12, de préférence filetée, formée au centre de sa surface extérieure, c'est-à-dire du côté orienté vers l'extérieur du conteneur lorsque ce couvercle 13 est assemblé avec un conteneur 1 tel que celui de la figure 1 pour former un autre accumulateur.

Ainsi, les creux extérieurs 10, 11 de l'accumulateur de la figure 1 permettent de connecter électriquement cet accumulateur avec un autre accumulateur pourvu d'un couvercle 13 tel que celui représenté à la figure 3, par coopération de type mâle-femelle entre la projection extérieure du couvercle 13 de la figure 3 et l'un des creux extérieurs 10, 11 des couvercles 3, 4 respectifs de l'accumulateur de la figure 1.

Lorsque les creux extérieurs 10, 11 sont taraudés, et la projection extérieure 12 est filetée, la coopération de type mâle-femelle mentionnée plus haut peut être sécurisée par vissage de la projection extérieure 12 dans l'un des creux extérieurs 10, 11.

Dans l'exemple de la figure 1, le conteneur 1 comprend un film 14 fermé sur lui-même par soudure, en sorte de former une enveloppe souple 14, à l'intérieur de laquelle est disposé le faisceau électrochimique 2.

Des exemples de fermeture de l'enveloppe souple 14 sont donnés respectivement dans les figures 4a et 4b.

Dans le cas de la figure 4a, la soudure 23, est obtenue par recouvrement de la paroi interne des deux extrémités du film 14. Cette variante, simple à réaliser, laisse cependant subsister un risque de fuite.

Dans le cas de la figure 4b, la soudure 24, plus efficace en termes de limitation des fuites, est obtenue par recouvrement de la paroi interne d'une des extrémités du film 14 sur la paroi externe de l'autre extrémité du film 14.

Ce film 14 est en matériau souple électriquement isolant. Il peut s'agir d'un film en matériau plastique souple, tel qu'un polyester (PPS, PBT, ...), du polyéthylène (PE), du polypropylène, ou encore du poly-téréphtalate d'éthylène (PET). Il peut aussi s'agir d'un film en matériau laminé comprenant une ou plusieurs feuilles métalliques insérées entre des feuilles de plastique. Dans ce cas, la ou les feuilles métalliques peuvent être des feuilles d'aluminium, et les feuilles de plastique peuvent être dans l'un des matériaux plastiques listés ci-dessus.

L'utilisation d'un tel film 14 permet de réduire au minimum l'encombrement de l'accumulateur, et donc de gagner en performances volumiques.

Comme on peut le voir sur la figure 1, les bords respectifs des couvercles 3, 4 sont assemblés de manière étanche avec l'enveloppe souple 14, par exemple par soudure ou par collage.

Pour un assemblage par soudure avec les couvercles 3, 4 métalliques, par exemple en aluminium, on prépare le métal des couvercles 3, 4 avec un traitement de surface approprié, tel qu'une anodisation phosphorique.

Dans la variante de la figure 1, les bords respectifs des couvercles 3, 4 sont courbés vers l'extérieur du conteneur 1, l'assemblage entre ces bords et l'enveloppe souple 14 se faisant alors par les faces internes respectives des couvercles 3, 4, c'est-à-dire les faces orientées vers l'intérieur du conteneur 1.

Dans la variante de la figure 2, par ailleurs en tout autre point identique à la variante de la figure 1, les bords respectifs des couvercles 3, 4 sont courbés vers l'intérieur du conteneur 1, l'assemblage entre ces bords et l'enveloppe souple 14 se faisant alors par les faces externes respectives des couvercles 3, 4, c'est-à-dire les faces orientées vers l'extérieur du conteneur 1.

Comme représenté sur les figures 1 et 2, on peut prévoir de recouvrir l'enveloppe souple 14 d'un tube extérieur 15 de faible épaisseur, en matériau électriquement isolant et rigide ou semi-rigide, tel qu'un matériau plastique comme du polypropylène (PP).

Alternativement, ce tube extérieur 15 peut remplacer l'enveloppe souple 14. Ainsi, dans les deux variantes respectives représentées aux figures 1 et 2, le conteneur 1 comprend une enveloppe souple 14 recouverte d'un tube extérieur 15. Mais dans une autre variante non représentée, le conteneur 1 peut comprendre le tube extérieur 15 sans l'enveloppe souple 14.

L'utilisation d'un matériau isolant électrique comme matériau de l'enveloppe souple 14 et/ou du tube extérieur 15, donc du conteneur 1, permet d'avoir des bornes opposées formées par les couvercles 3, 4 présentant une tension d'isolement importante, nettement supérieure à la tension d'éléments électrochimiques de l'état de la technique.

Dans l'un ou l'autre des cas, l'assemblage entre les bords respectifs des couvercles 3, 4 avec l'enveloppe souple 14 ou le tube extérieur 15 peut être obtenu par soudure ou par collage, voire par une combinaison des deux.

En fonction de la variante et des formes respectives des couvercles 3, 4, cet assemblage peut être réalisé au niveau de la paroi interne ou de la paroi externe de l'enveloppe souple 14 ou du tube extérieur 15. Ainsi, dans les deux exemples représentés respectivement aux figures 1 et 2, l'assemblage est réalisé au niveau de la paroi interne de l'enveloppe souple 14.

Dans encore une autre variante, représentée partiellement à la figure 5, on peut prévoir que l'assemblage entre le ou les couvercles et le conteneur 1 soit obtenu par sertissage. Ainsi, dans cet exemple, le couvercle 16 se trouve serti autour de l'extrémité de l'enveloppe souple 14 et du tube extérieur 15. Le sertissage s'effectue alors contre la paroi interne de l'enveloppe souple 14 et contre la paroi externe du tube extérieur 15.

Bien sûr, cette variante représentée à la figure 5 peut elle-même faire l'objet de sous-variantes, notamment selon la présence ou non de l'enveloppe souple 14, et la présence ou non du tube extérieur 15.

On peut également prévoir un renfort filamentaire extérieur, non représenté sur les figures, enroulé autour de l'enveloppe souple 14 ou du tube extérieur 15. Ce renfort filamentaire de préférence en matériau plastique, peut prendre la forme d'un film ou d'un ruban, par exemple en polyester renforcé de fibres de verre.

La présente description est donnée à titre d'exemple et n'est pas limitative de l'invention.

En particulier l'invention ne se limite pas à des accumulateurs de courant de forme d'ensemble cylindrique. D'autres formes qu'une forme cylindrique, telles que des formes centrées sur l'axe central (A) du tube 7 autour duquel le faisceau électrochimique 2 est enroulé, peuvent être envisagées.

Egalement, l'invention ne se limite pas à des choix de matériaux plastiques particuliers pour les différents composants du conteneur 1, tels que le film 14, le tube externe 15, et le renfort filamentaire.

## Revendications

1. Accumulateur comprenant un conteneur (1) contenant un faisceau électrochimique (2) comportant une alternance d'électrodes (2) positives et négatives encadrant des séparateurs imprégnés d'électrolyte, un tube creux (7) d'axe central (A) autour duquel le faisceau électrochimique (2) est enroulé, les rives (5, 6) des électrodes (2) positives, respectivement négatives, étant réparties sensiblement uniformément et de façon circulaire autour dudit axe (A) à proximité respectivement de chacune des extrémités dudit tube creux (7), ledit conteneur (1) présentant une première et une deuxième extrémités, et ledit accumulateur comprenant une première et une deuxième bornes (3, 4, 13, 16) de sortie de courant, ladite première borne (3, 4, 13, 16) de sortie de courant formant un premier couvercle (3, 4, 13, 16) de fermeture de la première extrémité du conteneur (1), les rives (5, 6) des électrodes (2) d'une des polarités étant connectées directement audit premier couvercle (3, 4, 13, 16) par soudure,
**caractérisé en ce que** le conteneur (1) est formé dans un matériau électriquement isolant, et **en ce que** la deuxième borne (3, 4, 13, 16) de sortie de courant forme un deuxième couvercle (3, 4, 13, 16) de fermeture de ladite deuxième extrémité du conteneur (1), les rives (5, 6) des électrodes (2) de l'autre des polarités étant connectées directement audit deuxième couvercle (3, 4, 13, 16) par soudure.

2. Accumulateur selon la revendication 1, **caractérisé en ce que** les rives (5, 6) des électrodes (2) positives, respectivement négatives, sont tassées et forment un socle (5, 6) de connexion soudé directement au premier, respectivement deuxième, couvercles (3, 4, 13, 16).

3. Accumulateur selon l'une quelconque des revendications 1 et 2, **caractérisé en ce que** le premier et/ou deuxième couvercle (3, 4, 16) est pourvu, en son centre et sur sa face orientée vers l'intérieur du conteneur (1), d'une projection intérieure (8, 9) qui s'insère dans l'une des extrémités du tube creux (7).

4. Accumulateur selon la revendication 3, **caractérisé en ce que** la projection intérieure (8, 9) forme un creux extérieur de connexion (10, 11) du côté de la face du premier et/ou deuxième couvercle orientée vers l'extérieur du conteneur (1), en sorte de permettre la connexion électrique avec un autre accumulateur selon l'une quelconque des revendications 1 et 2, par coopération de type mâle-femelle avec une projection extérieure de connexion (12) disposée au centre d'un couvercle (13) de fermeture du conteneur dudit autre accumulateur, sur la face orientée vers l'extérieur du conteneur de cet autre accumulateur.

5. Accumulateur selon la revendication 4, **caractérisé en ce que** le creux extérieur de connexion (10, 11) est taraudé, en sorte de permettre une coopération de type mâle-femelle par vissage d'une projection extérieure de connexion (12) filetée disposée au centre du couvercle (13) de fermeture du conteneur du l'autre accumulateur, sur la face orientée vers l'extérieur du conteneur de cet autre accumulateur.

6. Accumulateur selon l'une quelconque des revendications 1 et 2, **caractérisé en ce que** le premier et/ou deuxième couvercle (13) est pourvu, en son centre et sur sa face orientée vers l'extérieur du conteneur, d'une projection extérieure de connexion (12), en sorte de permettre la connexion électrique avec un autre accumulateur selon l'une quelconque des revendications 1 et 2 par coopération de type mâle-femelle avec un creux extérieur de connexion (10, 11) disposé au centre d'un couvercle (3, 4) de fermeture du conteneur (1) dudit autre accumulateur, sur la face orientée vers l'extérieur du conteneur (1) de cet autre accumulateur.

7. Accumulateur selon la revendication 6, **caractérisé en ce que** la projection extérieure de connexion (12) est filetée, en sorte de permettre une coopération de type mâle-femelle par vissage dans un creux extérieur de connexion (10, 11) taraudé disposé au centre du couvercle (3, 4) de fermeture du conteneur (1) de l'autre accumulateur, sur la face orientée vers l'extérieur du conteneur (1) de cet autre accumulateur.

8. Accumulateur selon l'une quelconque des revendications 1 à 7, **caractérisé en ce que** le conteneur (1) comprend un film (14) en matériau électriquement isolant.

9. Accumulateur selon la revendication 8, **caractérisé en ce que** le film (14) est en matériau souple, fermé sur lui-même par soudure en sorte de former une enveloppe (14) souple, à l'intérieur de laquelle est disposé le faisceau électrochimique (2).

10. Accumulateur selon l'une quelconque des revendications 8 et 9, **caractérisé en ce que** le film (14) est en matériau plastique, tel qu'un polyester, du polyéthylène (PE), du polypropylène (PP), ou du poly-téréphtalate d'éthylène (PET).

11. Accumulateur selon la revendication 8, **caractérisé en ce que** le film (14) est en matériau laminé comprenant au moins une feuille métallique, telle qu'une feuille d'aluminium, insérée entre deux feuilles de plastique, tel que des feuilles en polyester, en polyéthylène (PE), en polypropylène (PP), ou en poly-téréphtalate d'éthylène (PET).

12. Accumulateur selon l'une quelconque des revendications 1 à 11, **caractérisé en ce que** le conteneur (1) comprend un tube extérieur (15) en matériau électriquement isolant, rigide ou semi-rigide, tel qu'un matériau plastique comme du polypropylène (PP) ou du polyester (PE).

13. Accumulateur selon l'une quelconque des revendications 8 à 11 et selon la revendication 12, **caractérisé en ce que** le tube extérieur (15) recouvre l'enveloppe souple (14).

14. Accumulateur selon l'une quelconque des revendications 8 à 13, **caractérisé en ce que** le premier et/ou deuxième couvercle de fermeture (16) du conteneur (1) est serti sur le tube extérieur (15) ou sur l'enveloppe souple (14).

15. Accumulateur selon l'une quelconque des revendications 8 à 14, **caractérisé en ce que** le premier et/ou deuxième couvercle de fermeture (16) du conteneur (1) est collé sur la paroi interne ou la paroi externe du tube extérieur (15) ou de l'enveloppe souple (14).

16. Accumulateur selon l'une quelconque des revendications 8 à 15, **caractérisé en ce que** le premier et/ou deuxième couvercle de fermeture (16) du conteneur (1) est soudé sur la paroi interne ou la paroi externe du tube extérieur (15) ou de l'enveloppe souple (14).

17. Accumulateur selon l'une quelconque des revendications 8 à 16, **caractérisé en ce que** le conteneur (1) comprend un renfort filamentaire extérieur, de préférence en matériau plastique tel qu'un film ou un ruban en polyester renforcé de fibres de verre, enroulé autour de l'enveloppe souple (14) ou du tube extérieur (15).

18. Accumulateur selon l'une quelconque des revendications 1 à 17, caractérisé en que le faisceau électrochimique (2) est de type lithium-ion.

19. Accumulateur selon la revendication 18, **caractérisé en ce que** les électrodes positives sont réalisées sur un substrat en aluminium, et **en ce que** les électrodes négatives sont réalisées sur un substrat en cuivre.

20. Accumulateur selon la revendication 18, caractérisé en que le faisceau électrochimique (2) est de type lithium-oxyde de titanate ou LTO.

21. Accumulateur selon la revendication 20, **caractérisé en ce que** les électrodes positives et négatives sont réalisées sur un substrat en aluminium.

## Patentansprüche

1. Akkumulator, umfassend einen Behälter (1), enthaltend ein elektrochemisches Bündel (2) umfassend abwechselnde positive und negative Elektroden (2), welche Separatoren, die mit einem Elektrolyt imprägniert sind umrahmen, ein hohles Rohr (7) mit zentraler Achse (A), um welche das elektrochemisches Bündel (2) gewickelt ist, wobei die Kanten (5, 6) der positiven bzw. negativen Elektroden (2) im Wesentlichen gleichmäßig und kreisförmig um die genannte Achse (A) jeweils in der Nähe jedes der Enden des genannten hohlen Rohrs (7) verteilt sind, wobei der Behälter (1) eine erstes und ein zweites Ende aufweist, und wobei der genannte Akkumulator einen ersten und einen zweiten Anschluss (3, 4, 13, 16) als Stromausgang umfasst, wobei der genannte erste Anschluss (3, 4, 13, 16) als Stromausgang eine erste Abdeckung (3, 4, 13, 16) zum Verschließen des ersten Endes des Behälters (1) bildet, wobei die Kanten (5, 6) der Elektroden (2) mit einer der Polaritäten direkt mit der genannten ersten Abdeckung (3, 4, 13, 16) durch Schweißen verbunden sind,
**dadurch gekennzeichnet, dass** der Behälter (1) aus einem elektrisch isolierenden Material gebildet ist, und dass der zweite Anschluss (3, 4, 13, 16) als Stromausgang eine zweite Abdeckung (3, 4, 13, 16) zum Verschließen des genannten zweiten Endes des Behälters (1) bildet, und dass die Kanten (5, 6) der Elektroden (2) mit der anderen der Polaritäten direkt mit der genannten zweiten Abdeckung (3, 4, 13, 16) durch Schweißen verbunden sind.

2. Akkumulator nach Anspruch 1, **dadurch gekennzeichnet, dass** die Kanten (5, 6) der positiven bzw. negativen Elektroden (2) kompaktiert sind und einen Verbindungssockel (5, 6) bilden, der direkt an die erste bzw. zweite Abdeckung (3, 4, 13, 16) geschweißt ist.

3. Akkumulator nach einem der Ansprüche 1 und 2, **dadurch gekennzeichnet, dass** die erste und/oder zweite Abdeckung (3, 4, 16), in ihrem Zentrum und auf ihrer Fläche, die dem Inneren des Behälters (1) zugewandt ist, mit einem inneren Vorsprung (8, 9) versehen ist, der in eines der Enden des hohlen Rohrs (7) eingefügt ist.

4. Akkumulator nach Anspruch 3, **dadurch gekennzeichnet, dass** der innere Vorsprung (8, 9) einen äußeren Verbindungshohlraum (10, 11) auf der Seite der Fläche der ersten und/oder zweiten Abdeckung bildet, die der Außenseite des Behälters (1) zugewandt ist, um die elektrische Verbindung mit einem anderen Akkumulator nach einem der Ansprüche 1 und 2 zu gestatten, durch Zusammenwirken vom Typ männlich-weiblich mit einem äußeren Verbindungsvorsprung (12), der im Zentrum einer Abdeckung (13) zum Verschließen des Behälters des genannten anderen Akkumulators angeordnet ist, auf der Fläche, die der Außenseite des Behälters dieses anderen Akkumulators zugewandt ist.

5. Akkumulator nach Anspruch 4, **dadurch gekennzeichnet, dass** der äußere Verbindungshohlraum (10, 11) ein Gewinde aufweist, um ein Zusammenwirken vom Typ männlich-weiblich durch Verschrauben mit einem äußeren mit einem Gewinde versehenen Verbindungsvorsprung (12) zu gestatten, der im Zentrum der Abdeckung (13) zum Verschließen des Behälters des anderen Akkumulators angeordnet ist, auf der Fläche, die der Außenseite des Behälters dieses anderen Akkumulators zugewandt ist.

6. Akkumulator nach einem der Ansprüche 1 und 2, **dadurch gekennzeichnet, dass** die erste und/oder zweite Abdeckung (13), in ihrem Zentrum und auf ihrer Fläche, die der Außenseite des Behälters zugewandt ist, mit einem äußeren Verbindungsvorsprung (12) versehen ist, um die elektrische Verbindung mit einem anderen Akkumulator nach einem der Ansprüche 1 und 2 zu gestatten, durch Zusammenwirken vom Typ männlich-weiblich mit einem äußeren Verbindungshohlraum (10, 11), der im Zentrum einer Abdeckung (3, 4) zum Verschließen des Behälters (1) des genannten anderen Akkumulators angeordnet ist, auf der Fläche, die der Außenseite des Behälters (1) dieses anderen Akkumulators zugewandt ist.

7. Akkumulator nach Anspruch 6, **dadurch gekennzeichnet, dass** der äußere Verbindungsvorsprung (12) ein Gewinde aufweist, um ein Zusammenwirken vom Typ männlich-weiblich durch Verschrauben in einem äußeren mit einem Gewinde versehenen Verbindungshohlraum (10, 11) zu gestatten, der im Zentrum der Abdeckung (3, 4) zum Verschließen des Behälters (1) des anderen Akkumulators angeordnet ist, auf der Fläche, die der Außenseite des Behälters (1) dieses anderen Akkumulators zugewandt ist.

8. Akkumulator nach einem der Ansprüche 1 bis 7, **dadurch gekennzeichnet, dass** der Behälter (1) einen Film (14) aus einem elektrisch isolierenden Material umfasst.

9. Akkumulator nach Anspruch 8, **dadurch gekennzeichnet, dass** der Film (14) aus einem nachgiebigen Material besteht, das in sich durch Schweißen geschlossen ist, um eine nachgiebige Hülle (14) zu bilden, in deren Innerem das elektrochemische Bündel (2) angeordnet ist.

10. Akkumulator nach einem der Ansprüche 8 und 9, **dadurch gekennzeichnet, dass** der Film (14) aus einem Kunststoffmaterial besteht, wie einem Polyester, Polyethylen (PE), Polypropylen (PP) oder Polyethylenterephthalat (PET).

11. Akkumulator nach Anspruch 8, **dadurch gekennzeichnet, dass** der Film (14) aus einem laminierten Material besteht, umfassend mindestens eine Metallfolie, wie eine Aluminiumfolie, die zwischen zwei Kunststofffolien eingesetzt ist, wie Folien aus Polyester, aus Polyethylen (PE), aus Polypropylen (PP) oder aus Polyethylenterephthalat (PET).

12. Akkumulator nach einem der Ansprüche 1 bis 11, **dadurch gekennzeichnet, dass** der Behälter (1) ein äußeres Rohr (15) aus elektrisch isolierendem, starren oder halbstarren Material umfasst, wie einem Kunststoffmaterial, wie Polypropylen (PP) oder Polyester (PE).

13. Akkumulator nach einem der Ansprüche 8 bis 11 und nach Anspruch 12, **dadurch gekennzeichnet, dass** das äußere Rohr (15) die nachgiebige Hülle (14) bedeckt.

14. Akkumulator nach einem der Ansprüche 8 bis 13, **dadurch gekennzeichnet, dass** die erste und/oder zweite Abdeckung (16) zum Verschließen des Behälters (1) auf dem äußeren Rohr (15) oder auf der nachgiebigen Hülle (14) festgespannt ist.

15. Akkumulator nach einem der Ansprüche 8 bis 14, **dadurch gekennzeichnet, dass** die erste und/oder zweite Abdeckung (16) zum Verschließen des Behälters (1) auf die Innenwand oder die Außenwand des äußeren Rohrs (15) oder der nachgiebigen Hülle (14) geklebt ist.

16. Akkumulator nach einem der Ansprüche 8 bis 15, **dadurch gekennzeichnet, dass** die erste und/oder zweite Abdeckung (16) zum Verschließen des Behälters (1) auf die Innenwand oder die Außenwand des äußeren Rohrs (15) oder der nachgiebigen Hülle (14) geschweißt ist.

17. Akkumulator nach einem der Ansprüche 8 bis 16, **dadurch gekennzeichnet, dass** der Behälter (1) eine äußere Filamentverstärkung umfasst, vorzugsweise aus Kunststoffmaterial, wie einen Film oder ein Band aus glasfaserverstärktem Polyester, der oder das um die nachgiebige Hülle (14) oder das äußere Rohr (15) gewunden ist.

18. Akkumulator nach einem der Ansprüche 1 bis 17, **dadurch gekennzeichnet, dass** das elektrochemische Bündel (2) vom Lithiumionen-Typ ist.

19. Akkumulator nach Anspruch 18, **dadurch gekennzeichnet, dass** die positiven Elektroden auf einem Substrat aus Aluminium hergestellt sind, und dadurch, dass die negativen Elektroden auf einem Substrat aus Kupfer hergestellt sind.

20. Akkumulator nach Anspruch 18, **dadurch gekennzeichnet, dass** das elektrochemische Bündel (2) vom Lithium-Titanatoxid ,oder LTO, Typ ist.

21. Akkumulator nach Anspruch 20, **dadurch gekennzeichnet, dass** die positiven und negativen Elektroden auf einem Substrat aus Aluminium hergestellt sind.

## Claims

1. A secondary cell comprising a container (1) containing an electrode plate group (2) having alternating positive and negative electrodes (2) flanking separators impregnated with electrolyte, a hollow tube (7) of central axis (A) about which the electrode plate group (2) is wound, and in that the edge portions (5, 6) of the electrodes (2) of the electrode plate group (2) are distributed substantially evenly and circularly around said axis (A) respectively near each one of the ends of said hollow tube (7), said container (1) having a first and a second end, and said secondary cell having a first and a second current output terminal (3, 4, 13, 16), said first current output terminal (3, 4, 13, 16) forming a first closure member (3, 4, 13, 16) closing off the first end of said container (1), the edge portions (5, 6) of the electrodes (2) of one polarity being connected directly to said closure member (3, 4, 13, 16) by welding,
**characterized in that** the container (1) is made from an electrically insulating material, and **in that** the second current output terminal (3, 4, 13, 16) form a second closure member (3, 4, 13, 16) closing off the second end of said container (1), the edge portions (5, 6) of the electrodes (2) of one polarity being connected directly to said closure member (3, 4, 13, 16) by welding.

2. The secondary cell according to claim 1, **characterized in that** the edge portions (5, 6) of the electrodes (2) are compacted and form a connection portion of extra thickness (5, 6) which is welded directly to respectively the first or second closure member (3, 4, 13, 16)

3. The secondary cell according to any one of claims 1 to 2, **characterized in that** the first or second closure member (3, 4, 16) is provided at its center and on its face directed towards the interior of the container (1) with an inner projection (8, 9) which fits into one end of the hollow tube (7).

4. The secondary cell according to claim 3, **characterized in that** the inner projection (8, 9) forms an outer recess (10, 11) for connection at the outwardly directed face of the closure member of the container (1), so as to allow electrical connection with another secondary cell according to any of claims 1 and 2, by cooperation of a male-female type with an external projection for connection (12) disposed at the center of a closure member (13) for closing the said other secondary cell container, at the face directed towards the outside of the container of the said other secondary cell.

5. The secondary cell according to claim 4, **characterized in that** the outer recess (10, 11) for connection is threaded, so as to allow cooperation of a male-female screwed connection type by screwing an external threaded projection (12) disposed at a center of a closure member (13) for closing a container of the other secondary cell, at the face directed towards the outside of the container of the other secondary cell.

6. The secondary cell according to any one of claims 1 to 2, **characterized in that** the first and/or second closure member (13) is provided at its center and on its face directed towards the exterior of the container, with an external connecting projection (12), so as to allow electrical connection with another secondary cell according to any of claims 1 to 2, by cooperation of a male-female type with an outer recess (10, 11) for connection disposed at the center of a closure member (3, 4) for closing the container (1) of said other secondary cell, on the face directed towards the outside of the container (1) of this other secondary cell.

7. The secondary cell according to claim 6, **characterized in that** the external projection for connection (12) is threaded, so as to allow cooperation of a male-female type by screwing into a threaded outer recess (10, 11) for connection disposed at a center of the closure member (3, 4) for closing the container (1) of the other secondary cell, on the face directed towards the outside of the container (1) of this other secondary cell.

8. The secondary cell according to any one of claims 1 to 7, **characterized in that** the container (1) comprises a film (14) of electrically insulating material.

9. The secondary cell according to claim 8, **characterized in that** the film (14) is of flexible material, closed on itself by welding so as to form a flexible casing (14), within which an electrode plate group (2) is disposed.

10. The secondary cell according to any one of claims 8 and 9, **characterized in that** the film (14) is of plastics material, such as polyester, polyethylene (PE), polypropylene (PP), or poly-ethylene terephthalate (PET).

11. The secondary cell according to claim 8, **characterized in that** the film (14) is of laminated material comprising at least a metal thin strip such as aluminum thin strip, inserted between two plastic thin strips, such as thin strips made of polyester, polyethylene (PE), polypropylene (PP), or poly-ethylene terephthalate (PET).

12. The secondary cell according to any one of claims 1 to 11, **characterized in that** the container (1) comprises an outer tube (15) of electrically insulating, rigid or semi-rigid material such as a plastic material such as polypropylene (PP) or polyester (PE).

13. The secondary cell according to any one of claims 8 to 11 and claim 12, **characterized in that** the outer tube (15) covers the flexible casing (14).

14. The secondary cell according to any one of claims 9 to 14, **characterized in that** the first and/or second closure member (16) of the container (1) is crimped onto the outer tube (15) or onto the flexible casing (14).

15. The secondary cell according to any one of claims 8 to 14, **characterized in that** the first and/or second closure member (16) of the container (1) is bonded to the inner wall or the outer wall of the outer tube (15) or of the flexible casing (14).

16. The secondary cell according to any one of claims 8 to 15, **characterized in that** the first and/or second closure member (16) of the container (1) is welded to the inner wall or the outer wall of the outer tube (15) or the flexible casing (14).

17. The secondary cell according to any one of claims 8 to 16, **characterized in that** the container (1) comprises an outer filamentary reinforcement, preferably of plastic material such as a glass fiber-reinforced polyester film or tape, wound around the flexible casing (14) or the outer tube (15).

18. The secondary cell according to any one of claims 1 to 17, **characterized in that** the electrode plate group (2) is of the lithium-ion type.

19. The secondary cell according to claim 18, **characterized in that** the positive electrodes are formed on an aluminum substrate, and **in that** the negative electrodes are formed on a copper substrate.

20. The secondary cell according to claim 18, **characterized in that** the electrode plate group (2) is of a lithium titanate oxide or LTO type.

21. The secondary cell according to claim 20, **characterized in that** the positive and negative electrodes are formed on an aluminum substrate.
